# EUROPEAN PATENT SPECIFICATION

(11) **EP 4 704 032 B1**
(45) Date of publication and mention of the grant of the patent: **26.08.2026**
(21) Application number: 25184356.1
(22) Date of filing: 23.06.2025
(51) Int. Cl.: G06T 7/37

(54) **METHODS AND SYSTEMS FOR IMAGE CO-REGISTRATION OF MULTI-MODAL TEMPORAL SENSING**
VERFAHREN UND SYSTEME ZUR BILDKOREGISTRATION VON MULTIMODALER ZEITLICHER ERFASSUNG
PROCÉDÉS ET SYSTÈMES DE CO-ENREGISTREMENT D'IMAGE DE DÉTECTION TEMPORELLE MULTIMODALE

(30) Priority: 27.08.2024 IN 202421064417
(43) Date of publication of application: 04.03.2026
(73) Proprietor: Tata Consultancy Services Limited, Maharashtra (IN)
(72) Inventor: ISLAM, Syed Mujibul, 700135 Kolkata, West Bengal (IN); GHOSH, Shubhrangshu, 700135 Kolkata, West Bengal (IN); ROY CHOUDHURY, Abhishek, 700135 Kolkata, West Bengal (IN); PAL, Arpan, 700135 Kolkata, West Bengal (IN)
(74) Representative: Goddar, Heinz J.

(56) References cited:
- FANG YUYUAN ET AL: "SAR-Optical Image Matching by Integrating Siamese U-Net With FFT Correlation", IEEE GEOSCIENCE AND REMOTE SENSING LETTERS, vol. 19, 1 January 2022 (2022-01-01), USA, pages 1 - 5, XP093342685, ISSN: 1545-598X, DOI: 10.1109/LGRS.2021.3100531
- WISKOTT L ET AL: "FACE RECOGNITION BY ELASTIC BUNCH GRAPH MATCHING", IEEE TRANSACTIONS ON PATTERN ANALYSIS AND MACHINE INTELLIGENCE, IEEE COMPUTER SOCIETY, USA, vol. 19, no. 7, 1 July 1997 (1997-07-01), pages 775 - 779, XP000698176, ISSN: 0162-8828, DOI: 10.1109/34.598235
- XIE ZHIHUA ET AL: "Optical and SAR Image Registration Based on the Phase Congruency Framework", APPLIED SCIENCES, vol. 13, no. 10, 10 May 2023 (2023-05-10), Basel, pages 5887, XP093342686, ISSN: 2076-3417, DOI: 10.3390/app13105887

## Description

### TECHNICAL FIELD

The disclosure herein generally relates to image co-registration, and, more particularly, to methods and systems for image co-registration of multi-modal temporal sensing.

### BACKGROUND

With the drastic increase of remote sensing payloads both in terms of satellite count and advancements of sensing technologies and resolution, automatic matching and registration of multi-modality images are very essential for mission-critical applications with time efficiency and high accuracy. For example, optical sensors and Synthetic Aperture Radar (SAR) sensors utilize distinct imaging techniques and as a result, the process of matching SAR images and optical images from these two modalities is not only less precise but also requires a significant amount of time.

Conventional techniques for image co-registration of multi-modality images focus on either the spatial or temporal domain and thus are not of high accuracy and do not preserve both global and local characteristics for the matching (comparison). For example, a conventional template matching technique assesses a similarity of the SAR and optical images by sliding a template image over the reference image and applying a variety of metrics, including Normalized Cross Correlation (NCC), Sum of Squared Differences (SSD), and Structural Similarity Index Measure (SSIM), to determine the similarity score. However, this template matching technique has been developed for optical matching problems and fails to exploit matching relations of heterogeneous features. Also, designing manual features to exploit multi-scale semantic information is quite challenging with this technique. Conventional feature extraction approaches such as Scale-Invariant Feature Transform (SIFT) create Difference-of-Gaussian (DoG) images to determine points of interest and perform matching using the gradient information of the point of interest. However, the SIFT uses the homogeneous image feature to perform matching but optical and SAR images have a fundamental difference in the image acquisition process.

Furthermore, deep learning-based techniques for template matching in Optical SAR imagery make use of a dot product where the heterogeneous modalities dataset is fed into the Convolution Neural Network (CNN) to convert the images into homogeneous feature maps. The feature maps are then matched by using a template image and reference image using the dot product. The output is obtained as a heat map, whose peak provides the shift of template image in reference images. The dot product is an intensive operation. Since images are matched based on local spatial features only, there are significant false matches. Also, Fast Fourier Transform (FFT) and Siamese Network with weight sharing are employed, where the weight sharing allows homogeneous training of the network, and the resulting image is calculated using the FFT algorithm. Though the FFT is extremely fast only the global feature is considered alone leaving the image matching for the image co-registration less accurate and less effective.

### SUMMARY

Embodiments of the present disclosure present technological improvements as solutions to one or more of the above-mentioned technical problems recognized by the inventors in conventional systems.

In an aspect, a processor-implemented method for image co-registration of multi-modal temporal sensing is provided. The method including the steps of: receiving for a predefined region of interest, a first image set and a second image set, wherein the first image set comprises a plurality of reference images and the second image set comprises a plurality of matching images, and wherein the first image set and the second image set are orthorectified to each other with one-to-one association; dividing (i) each reference image of the plurality of reference images to obtain one or more reference image patches associated with each reference image, and (ii) each matching image of the plurality of matching images to obtain one or more matching image patches associated with each matching image, using an image splitting technique; extracting in a homogeneous latent space, using an encoder of a deep-learning based multi-input-output encoder-decoder network, (i) a plurality of reference feature maps associated with each reference image patch of the one or more reference image patches associated with each of the plurality of reference images, (ii) a plurality of matching image feature maps associated with each matching image patch of the one or more matching image patches associated with each of the plurality of matching images; determining a similarity score between (i) each reference image of the plurality of reference images present in the first image set and (ii) a matching image associated with each reference image and is of the plurality of matching images present in the second image set, by employing a Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images; and generating one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set.

In another aspect, a system for image co-registration of multi-modal temporal sensing is provided. The system includes: a memory storing instructions; one or more Input/Output (I/O) interfaces; and one or more hardware processors coupled to the memory via the one or more I/O interfaces, wherein the one or more hardware processors are configured by the instructions to: receive for a predefined region of interest, a first image set and a second image set, wherein the first image set comprises a plurality of reference images and the second image set comprises a plurality of matching images, and wherein the first image set and the second image set are orthorectified to each other with one-to-one association; divide (i) each reference image of the plurality of reference images to obtain one or more reference image patches associated with each reference image, and (ii) each matching image of the plurality of matching images to obtain one or more matching image patches associated with each matching image, using an image splitting technique; extract in a homogeneous latent space, using an encoder of a deep-learning based multi-input-output encoder-decoder network, (i) a plurality of reference feature maps associated with each reference image patch of the one or more reference image patches associated with each of the plurality of reference images, (ii) a plurality of matching image feature maps associated with each matching image patch of the one or more matching image patches associated with each of the plurality of matching images; determine a similarity score between (i) each reference image of the plurality of reference images present in the first image set and (ii) a matching image associated with each reference image and is of the plurality of matching images present in the second image set, by employing a Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images; and generate one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set.

In yet another aspect, there are provided one or more non-transitory machine-readable information storage mediums comprising one or more instructions which when executed by one or more hardware processors cause: receiving for a predefined region of interest, a first image set and a second image set, wherein the first image set comprises a plurality of reference images and the second image set comprises a plurality of matching images, and wherein the first image set and the second image set are orthorectified to each other with one-to-one association; dividing (i) each reference image of the plurality of reference images to obtain one or more reference image patches associated with each reference image, and (ii) each matching image of the plurality of matching images to obtain one or more matching image patches associated with each matching image, using an image splitting technique; extracting in a homogeneous latent space, using an encoder of a deep-learning based multi-input-output encoder-decoder network, (i) a plurality of reference feature maps associated with each reference image patch of the one or more reference image patches associated with each of the plurality of reference images, (ii) a plurality of matching image feature maps associated with each matching image patch of the one or more matching image patches associated with each of the plurality of matching images; determining a similarity score between (i) each reference image of the plurality of reference images present in the first image set and (ii) a matching image associated with each reference image and is of the plurality of matching images present in the second image set, by employing a Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images; and generating one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set.

In an embodiment, the first image set is associated with a first modality and the second image set is associated with a second modality.

In an embodiment, determining the similarity score between (i) each reference image of the plurality of reference images present in the first image set and (ii) a matching image associated with each reference image and is of the plurality of matching images present in the second image set, by employing the Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images, comprises: performing a Gabor transformation on (i) each reference feature map of the plurality of reference feature maps and (ii) each matching image feature map of the plurality of matching image feature maps, to obtain (i) a plurality of transformed reference feature maps from the plurality of reference feature maps associated with each reference image patch of the one or more reference image patches associated with each of the plurality of reference images and (ii) a plurality of transformed matching image feature maps from the plurality of matching image feature maps associated with each matching image patch of the one or more matching image patches associated with each of the plurality of matching images, respectively; generating (i) a plurality of reference Gabor jet grid graphs from the plurality of transformed reference feature maps associated with each reference image patch of the one or more reference image patches associated with each of the plurality of reference images and (ii) a plurality of matching Gabor jet grid graphs from the plurality of transformed matching image feature maps associated with each matching image patch of the one or more matching image patches associated with each of the plurality of matching images; and determining the similarity score between (i) each reference image and (ii) the matching image associated with each reference image, by employing a sparse sliding window matching technique, using the plurality of reference Gabor jet grid graphs associated with each reference image patch of the one or more reference image patches associated with each reference image and the plurality of matching Gabor jet grid graphs associated with each matching image patch of the one or more matching image patches associated with each matching image.

In an embodiment, generating the one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set, comprises: determining a heat map for (i) each reference image and (ii) the matching image associated with each reference image, based on the similarity score associated with (i) each reference image and (ii) the matching image associated with each reference image; and generating the one or more reference-matching co-registered images for the predefined region of interest, from the plurality of reference images present in the first image set and the plurality of matching images present in the second image set, based on the heat map determined for (i) each reference image and (ii) the matching image associated with each reference image.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for image co-registration of multi-modal temporal sensing, in accordance with some embodiments of the present disclosure.
FIGS. 2A and 2B illustrate exemplary flow diagrams of a processor-implemented method for image co-registration of multi-modal temporal sensing, using the system of FIG. 1, in accordance with some embodiments of the present disclosure.
FIG. 3 shows an exemplary architecture of a U-Net of a Siamese U-Net, in accordance with some embodiments of the present disclosure.
FIG. 4 shows an exemplary architecture of a Gabor wavelet matcher, in accordance with some embodiments of the present disclosure.
FIG. 5 is a flow diagram showing steps for determining a similarity score between each reference image in a first image set and an associated matching image in a second image set, using the Gabor wavelet matcher of FIG. 4, in accordance with some embodiments of the present disclosure.
FIG. 6 is a flow diagram showing steps for generating one or more reference-matching co-registered images for a predefined region of interest, from a plurality of reference images present in the first image set and a plurality of matching images present in the second image set, in accordance with some embodiments of the present disclosure.
FIG. 7 shows an exemplary block diagram of a deep neural architecture for image co-registration of multi-modal temporal sensing, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Access to high-resolution earth observation data has rapidly increased for end users since the space age began. As a result, there is now a greater need than ever to extract actionable customer insights for a range of use cases, including disaster management, building footprint extraction, change detection, and other tasks. Due to its ease of interpretation, visible light spectrum data derived from electro-optical imagery is the most widely used type of data. However, only half of earth is ever illuminated, and the planet's average 67% cloud cover makes time-sensitive or continuous observation difficult. Due to its ability to actively sense any location, regardless of lighting and environmental conditions, synthetic aperture radar (SAR) has emerged as the second most popular mode for use in space-borne satellite platforms, helping to alleviate the problem.

Data fusion is an essential step in interpreting multi-modality images such as the SAR and optical imagery and providing additional information about specific objects or images. Every sensor is calibrated according to its specifications and the trajectory of the platform defined by the corresponding model. The calibration produces orthorectified data products with specified error margins. Therefore, image co-registration is a crucial step in performing data fusion, as it allows heterogeneous modalities to be registered according to their image characteristics. Selecting appropriate ground control points (GCPs) from different modality images and aligning them using statistical parameters are the steps involved in the co-registration of various modalities.

Hence, image co-registration is a challenging problem in remote sensing. The image co-registration refers to the alignment of images of the same scene, captured from different sensors such as Optical and SAR. Optical sensors rely on the scene's illumination by external sources such as the Sun. The illumination of the source and natural reflective properties of objects form the images. The imagery is mainly confined to the visible section of the electromagnetic spectrum. Geometrical characteristics of optical acquisition of objects that are perpendicular to the azimuth direction appear minimized or foreshortened in the sensor's image plane, offset mainly due to near-Nadir acquisition, which causes moderate distortions throughout the scene.

In contrast, SAR uses a radar source fixed on the platform to illuminate the scene, and then records the back-scattered signal's magnitude, range, and Doppler shift to produce the images. The images are mainly confined to the microwave spectrum. The time-of-flight-based imaging principle of SAR imagery leads to the projection of above-ground objects towards the sensor in the image plane. This results in geometric distortions that significantly impact the final image, including layover, foreshortening, and shadow. Due to the substantial radiometric and geometric differences between the methods of acquisition, the co-registration of these modalities is a difficult task, even for the experts. But recent developments in deep learning have made it possible to map intricate relationships to a standard feature space. Automated image co-registration facilitates essential automation and pipeline development for integrating data fusion needs and addressing subsequent tasks, such as change detection, monitoring or assessment of natural disasters.

There are many available approaches to the SAR-Optical Image Registration problem in the literature. A common technique used in object detection, face recognition, motion tracking, medical image analysis, and image registration is template matching. The similarity of the SAR and optical images is assessed by sliding a template image over the reference image and applying a variety of metrics, including Normalized Cross Correlation (NCC), Sum of Squared Differences (SSD), and Structural Similarity Index Measure (SSIM), to determine a similarity score. However, this method has been developed for optical matching problems and fails to exploit matching relations of heterogeneous features. Also, it is difficult to design manual features to exploit multi-scale semantic information.

Feature Extraction approaches aim to exploit the distinctive features of an image, such as closed boundary polygon formed from lakes or forests or salient features like road or cross sections. One of the most widely used image-matching algorithms is SIFT. It creates Difference-of-Gaussian (DoG) images to determine points of interest and perform matching using the gradient information of the point of interest. However, SIFT uses the homogeneous image feature to perform matching but Optical and SAR images have a fundamental difference in the image acquisition process.

Current improvements in deep learning techniques and hardware accelerators in the artificial intelligence (AI) revolution have accelerated computation power. The need for a sizable, varied training set is one of the drawbacks of deep learning methods. With the boom in satellite platforms, data availability has been mitigated and many public datasets are available for training. Merkle et al introduced the use of a deep learning network for template matching in Optical SAR imagery by use of dot product. The heterogeneous modalities dataset is fed into the CNN to convert the images into homogeneous feature maps. The feature maps are then matched by using a template image and reference image using a dot product. The output is obtained as a heat map, whose peak provides the shift of template image in reference images. The dot product is an intensive operation. Since images are matched based on local spatial features only, there are significant false matches.

Fang et al. introduced the use of Fast Fourier Transform (FFT) and Siamese Network with weight sharing. The weight sharing allows homogeneous training of the network, and the resulting image is calculated using the FFT algorithm. FFT is extremely fast. However, the algorithm takes into account the global feature alone, which can be further improved. Other works include Hughes et al. intricate network divided into 3 parts: goodness network, correspondence network, and outlier network, as well as Zhang et al. Deep Dense Feature Network (DDFN).

The present disclosure solves the technical problems in the art for image co-registration of multi-modal temporal sensing using a deep-learning based multi-input-output encoder-decoder network (such as an integrated U-Net architecture) with a Gabor Jet Model. The deep-learning based multi-input-output encoder-decoder network is utilized for the feature extraction. A distinctive Gabor-jet layer of the Gabor Jet Model is utilized for the similarity matching.

According to the present disclosure, the Gabor-jet layer generates Gabor jet graph which provides sparse feature points for matching between matching images (also referred as template images) and reference images. The phase and disparity information in graph nodes provides a potential advantage in discriminating patterns with the same magnitude as well as accurate localization of jets in the image. With the help of phase and disparity information, a custom loss function is proposed in the present disclosure which allows accurate matching at low inference cost and faster training of neural networks.

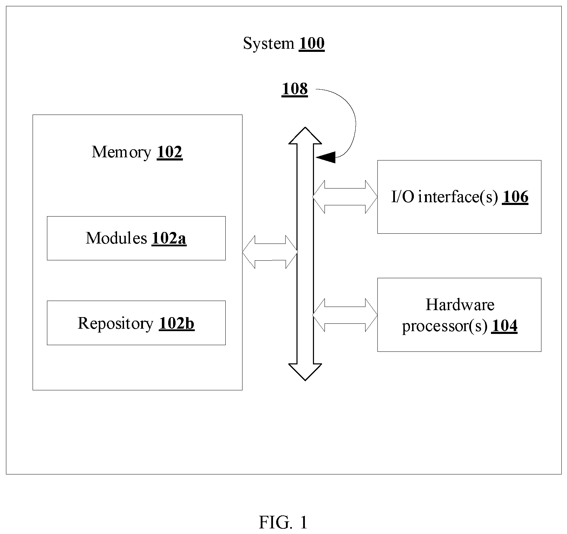

Referring now to the drawings, and more particularly to FIG. 1 through FIG. 7, where similar reference characters denote corresponding features consistently throughout the figures, there are shown preferred embodiments, and these embodiments are described in the context of the following exemplary systems and/or methods.

FIG. 1 is an exemplary block diagram of a system 100 for image co-registration of multi-modal temporal sensing, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

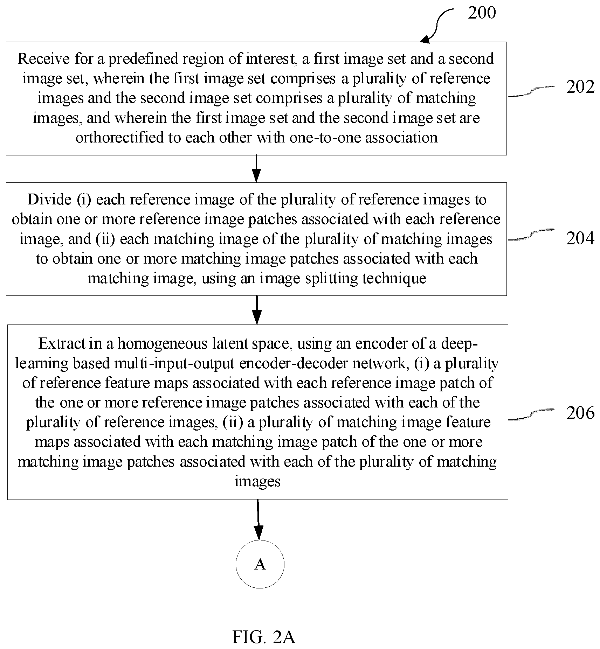

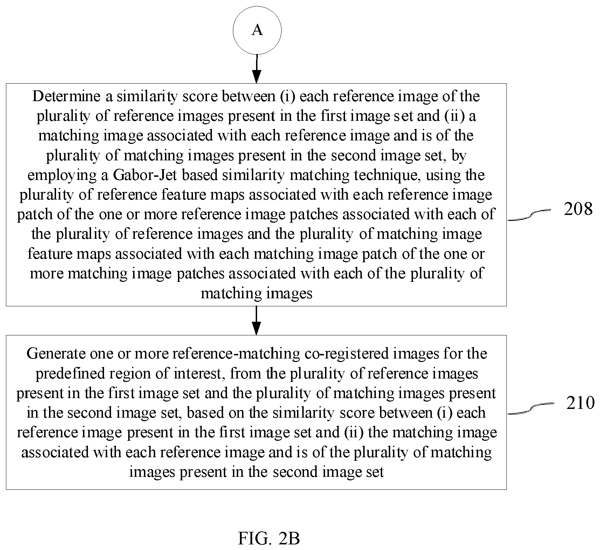

Referring to FIGS. 2A and 2B, components and functionalities of the system 100 are described in accordance with an example embodiment of the present disclosure. For example, FIGS. 2A and 2B illustrate exemplary flow diagrams of a processor-implemented method 200 for image co-registration of multi-modal temporal sensing, using the system 100 of FIG. 1, in accordance with some embodiments of the present disclosure. Although the steps of the method 200 shown in FIGS. 2A and 2B including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive a first image set and a second image set for a predefined region of interest. The predefined region of interest is an area to be assessed with the use of the first image set and a second image set. In an embodiment, the predefined region of interest is identified with latitude and longitude coordinates. The first image set is associated with a first modality and the second image set is associated with a second modality. Thus, both the first image set, and the second image set together are multi-modality (dual) images of the predefined region of interest.

According to the present disclosure, the first image set includes a plurality of reference images, i.e. of the first modality images (received from a first modality). Similarly, the second image set includes a plurality of matching images, i.e. of the second modality images (received from a second modality). The first image set, and the second image set are orthorectified to each other which mean the plurality of reference images in the first image set and the plurality of matching images in the second image set are with the same latitude and longitude coordinates. Furthermore, the first image set, and the second image set contains with one-to-one association which means that each reference image of the plurality of reference images in the first image set contains an associated matching image of the plurality of matching images in the first image set. More specifically each reference image of the first modality contains the associated matching image of the second modality.

In an embodiment, the first modality and the second modality of the multi-modality include but are not limited to a SAR model, an optical model, and a Light Detection and Ranging (LIDAR) model, and a multi-spectral model. For example, in the dual modality, the first modality may be the SAR model and contains the plurality of SAR images and the second modality may be the optical model and contains the plurality of optical images, or vice-versa.

At step 204 of the method 200, the one or more hardware processors 104 of the system 100 are configured to divide each reference image of the plurality of reference images in the first image set received at step 202 of the method 200 to obtain one or more reference image patches associated with each reference image. Similarly, the one or more hardware processors 104 of the system 100 are configured to divide each matching image of the plurality of matching images in the second image set received at step 202 of the method 200 to obtain one or more matching image patches associated with each matching image. According to the present disclosure, an image splitting technique such as an image splitter or an image cropper is employed to divide each reference image into the one or more matching image patches and each matching image into the one or more matching image patches.

At step 206 of the method 200, the one or more hardware processors 104 of the system 100 are configured to extract a plurality of reference feature maps associated with each reference image patch of the one or more reference image patches obtained at step 204 of the method 200, associated with each of the plurality of reference images. Similarly, the one or more hardware processors 104 of the system 100 are configured to extract a plurality of matching image feature maps associated with each matching image patch of the one or more matching image patches obtained at step 204 of the method 200, associated with each of the plurality of matching images.

According to the present disclosure, a deep-learning based multi-input-output encoder-decoder network such as a Siamese U-Net is employed to extract the plurality of reference feature maps associated with each reference image patch and the plurality of matching image feature maps associated with each matching image patch. In an embodiment, the Siamese U-Net is employed to obtain the plurality of reference feature maps and the plurality of matching image feature maps in a homogeneous latent space.

The Siamese U-Net networks are a paired network architecture comprising two artificial neural networks (U-Nets). Each network (U-Net) processes its input sample using identical weights, generating representation embeddings. This allows for comparing the similarity between the two samples. The U-Net architecture is distinct in its design, featuring both a contracting and an expansive pathway. The contracting path includes encoder layers that capture contextual details and decrease the spatial resolution of the input. Conversely, the expansive path incorporates decoder layers that reconstruct the encoded information. These pathways are interconnected via skip connections, enabling the model to generate detailed segmentation maps effectively. Moreover, the U-net is unrestricted by input image size and avoids the time-consuming sliding operation for matching. The Siamese U-Net architecture, compared to its Pseudo Siamese counterpart, more efficiently distils common features rendering it less sensitive to intensity variations across diverse models and contributing to faster convergence.

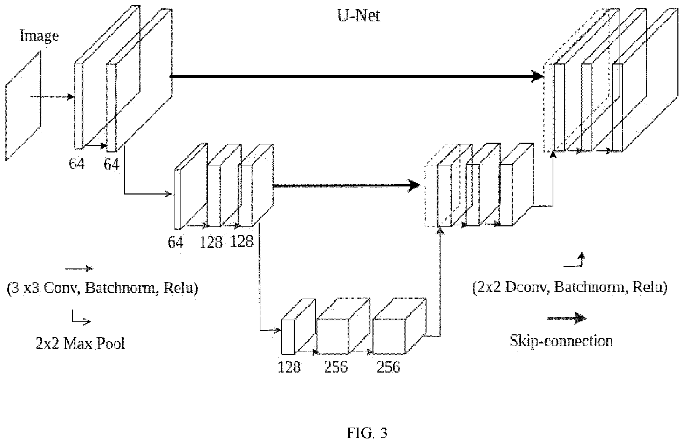

FIG. 3 shows an exemplary architecture of the U-Net of the Siamese U-Net, in accordance with some embodiments of the present disclosure. As shown in FIG. 3, the single U-Net includes a Convolution (Conv) block, followed by Max-Pooling in the encode part and a De-convolution (Deconv) block in the decoder part. The Conv block includes a 2D-convolution, a Batch Normalization (Batchnorm), and a non-linear activation: Rectified Linear Unit (Relu). The Convolution layers are designed to extract spatial features from input data using trainable filters. As the input passes through these layers, the distribution of each layer's input changes. Therefore, Batchnorm is applied in every layer to maintain consistency in input distributions, serving as a form of regularization and reducing the network's reliance on weight initialization for performance. The Relu serves as a non-linear activation function, introducing nonlinearities essential for preventing simple linear mappings by the model. Similarly, the Deconv block is also comprised of the Batchnorm and the Relu. The U-Net of the Siamese U-Net shown in FIG. 3 features 3 upsampling and 3 downsampling layers.

At step 208 of the method 200, the one or more hardware processors 104 of the system 100 are configured to determine a similarity score between each reference image in the first image set and the associated matching image in the second image set, using the plurality of reference feature maps associated with the reference image patch and the plurality of matching image feature maps associated with the matching image patch.

According to the present disclosure, a Gabor-Jet based similarity matching technique is employed to determine the similarity score between each reference image in the first image set and the associated matching image in the second image set (same image but of two modalities). The Gabor-Jet based similarity matching technique contains a Gabor wavelet matcher to match each reference image in the first image set and the associated matching image in the second image set.

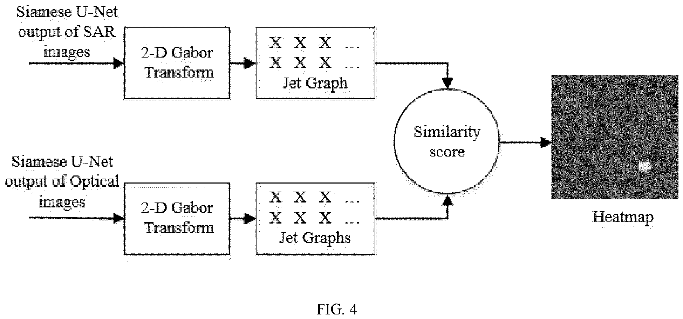

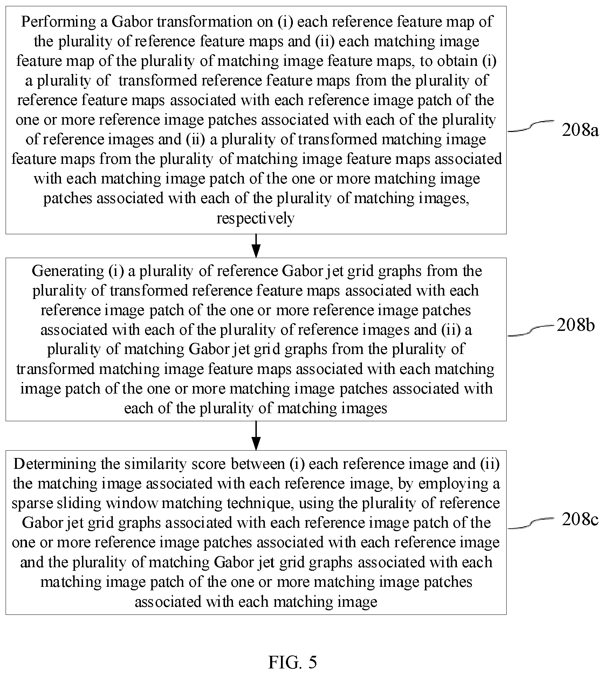

FIG. 4 shows an exemplary architecture of the Gabor wavelet matcher, in accordance with some embodiments of the present disclosure. FIG. 5 is a flow diagram showing steps for determining the similarity score between each reference image in the first image set and the associated matching image in the second image set, using the Gabor wavelet matcher of FIG. 4, in accordance with some embodiments of the present disclosure. As shown in FIG. 5, determining the similarity score between each reference image in the first image set and the associated matching image in the second image set, using the Gabor wavelet matcher is explained through steps 208a through 208c.

At step 208a, a Gabor transformation is performed on each reference feature map of the plurality of reference feature maps to obtain a plurality of transformed reference feature maps from the plurality of reference feature maps associated with each reference image patch of the one or more reference image patches associated with each of the plurality of reference images. Further, the Gabor transformation is performed on each matching image feature map of the plurality of matching image feature maps to obtain a plurality of transformed matching image feature maps from the plurality of matching image feature maps associated with each matching image patch of the one or more matching image patches associated with each of the plurality of matching images.

At step 208b, a plurality of reference Gabor jet grid graphs is generated from the plurality of transformed reference feature maps, obtained at step 208a, associated with each reference image patch of the one or more reference image patches associated with each of the plurality of reference images. Further, a plurality of matching Gabor jet grid graphs is generated from the plurality of transformed matching image feature maps, obtained at step 208b, associated with each matching image patch of the one or more matching image patches associated with each of the plurality of matching images.

Consider that a 192x192 feature map for SAR matching image patch is received as an output of the U-Net. Now, this 192x192 feature map is passed as input to the Gabor Transform step to create Gabor jet feature map (or Gabor jet grid graph) of dimension 192x192. The Gabor jet grid map is called "Grid" because within the 192 x 192 feature map, 16x16 (=256) discrete Gabor jets are considered with each having its own magnitude and phase. Each of these Gabor jets has 40 channels and these 40 channels are created based on different scales and directions.

Consider the 256x256 dimension feature map for optical reference image patch is received as an output of the U-Net. Now, this feature map also when passed through the Gabor Transform step, yields a Gabor jet grid graph of dimension 256x256.

At step 208c, the similarity score is determined between each reference image and the matching image associated with each reference image, by employing a sparse sliding window matching technique, using the plurality of reference Gabor jet grid graphs of the associated reference image patch and the associated matching image patch.

At step 210 of the method 200, the one or more hardware processors 104 of the system 100 are configured to generate one or more reference-matching co-registered images for the predefined region of interest, from the plurality of reference images present in the first image set and the plurality of matching images present in the second image set, based on the similarity score between each reference image present in the first image set and (ii) the matching image associated with each reference image present in the second image set, determined at step 208 of the method 200.

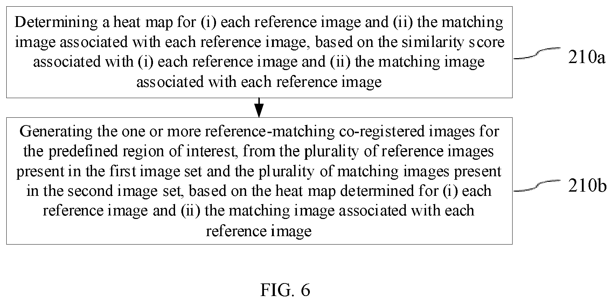

FIG. 6 is a flow diagram showing steps for generating the one or more reference-matching co-registered images for the predefined region of interest, from the plurality of reference images present in the first image set and the plurality of matching images present in the second image set, in accordance with some embodiments of the present disclosure. As shown in FIG. 6, generating the one or more reference-matching co-registered images for the predefined region of interest, from the plurality of reference images present in the first image set and the plurality of matching images present in the second image set is explained through steps 210a to 210b.

At step 210a, a heat map is generated for (i) each reference image and (ii) the matching image associated with each reference image, based on the similarity score associated with (i) each reference image, and (ii) the matching image associated with each reference image.

At step 210b, the one or more reference-matching co-registered images are generated for the predefined region of interest, from the plurality of reference images present in the first image set and the plurality of matching images present in the second image set, based on the heat map determined for (i) each reference image and (ii) the matching image associated with each reference image.

For example, the matching image Gabor jet grid graph (192x192) is matched against reference image Gabor jet grid graph (256 x 256) using sliding window with sliding step size =1. This matching is done based on the 16x16 discrete Gabor jets present in the template graph. After this sliding-window matching process, a heat-map of dimension 65x65 is generated. The heat-map is formed as follows: For each sliding window, one similarity score is obtained. This similarity score is calculated based on the magnitude and phase of the Gabor-jets. This score is stored as the top-left co-ordinate value of the output heat-map. So, for the first sliding window, the resulting similarity score will be stored at (x=0, y=0) co-ordinate in the heatmap. Next scores will be stored at (x=1, y=0), ..., (x=64, y=0), (x=0, y=1), (x=1, y=1), ......, (x=64, y=64).

Once this heat-map is formed, the co-ordinate within the heat-map which has the maximum similarity scores is identified and stored. For example, if the identified co-ordinate with the maximum similarity score is (x=3, y=5), Then the given SAR template has the best-fit position (or the predicted shift) at (3,5) within the optical reference image with top-left corner pixel of the template image coinciding at (x=3, y=5) position of the reference image.

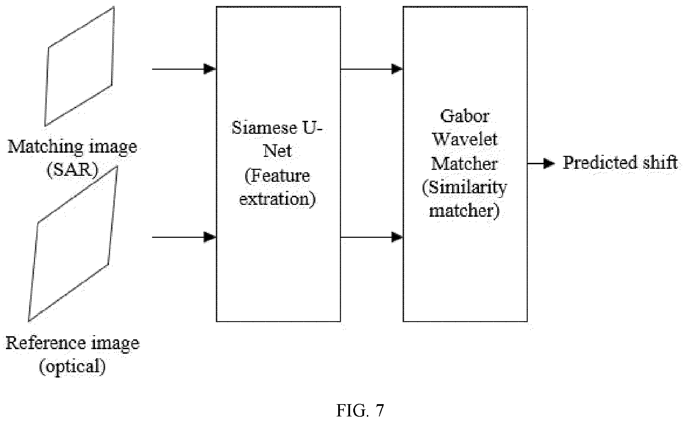

FIG. 7 shows an exemplary block diagram of a deep neural architecture for image co-registration of multi-modal temporal sensing, in accordance with some embodiments of the present disclosure. As shown in FIG. 7, the Siamese U-Net is used as the deep-learning based multi-input-output encoder-decoder network for the feature extraction. The Gabor Wavelet Matcher is used to determine the similarity score as a heat map. The matching image is considered as the SAR image and the reference image is considered as the optimal image.

The overall output of the proposed architecture can be mathematically represented as equation (1): $Output = G \left(S\left({I}_{sar}, {I}_{opt}\right)\right)$ Where *Iₛₐᵣ* and *Iₛₐᵣ* are the input SAR and optical images respectively. The *G*(.,.) stands for the Gabor-jet function which measures the similarity between the two extracted feature sets as obtained from the Siamese U-Net, denoted by *S*(.,.) function.

The output *S*(.,.) of the Siamese U-Net can be represented as in equation (2): $S \left({I}_{sar}, {I}_{opt}\right) = \left(U\left({I}_{sar}, W\right),U\left({I}_{opt}, W\right)\right)$ Where *U* represents U-Net function and in this Siamese U-Net architecture, both the U-Nets share the same weight *W*.

As part of preprocessing, the dataset of the multi-modality images (SAR and optical images) is normalized. The U-net utilized in the present disclosure includes four encoder blocks for down-sampling, with output channel sizes set to 64, 128, 256, 512. A Stochastic Gradient Descent (SGD) optimizer is employed with an initial learning rate of 0.1 and incorporated the ReduceLROnPlateau learning-rate scheduler during the training. The training is conducted over 100 epochs with a batch size of 8.

Gabor wavelet family is a robust representation of conjoint spatial and Fourier domain and, along with its biological relevance makes an ideal choice of wavelet family for analysis. It is used widely in literature for recognition and texture matching. The mother Gabor wavelet in spatial domain can be represented as in equation (3): $ψ \left(\vec{x}\right) = \frac{1}{{σ}^{2}} {e}^{- \frac{{\vec{x}}^{2}}{2 {σ}^{2}}} {e}^{i {\vec{e}}_{h}^{T} \vec{x}}$

Equation 3 consists of two parts of a Gaussian with a standard deviation *ψ* and a complex valued even wave ${e}^{i {\vec{e}}_{h}^{T} \vec{x}}$. By introducing different scales (*k*) and directions, the actual Gabor wavelet (mother wavelet) can be modified to generate new wavelets (daughter wavelets), which can be represented in spatial domain as in equation (4): ${ψ}_{\vec{k}} \left(\vec{x}\right) = \frac{{\vec{k}}^{2}}{{σ}^{2}} {e}^{- \frac{{\vec{k}}^{2} {\vec{x}}^{2}}{2 {σ}^{2}} \left[{e}^{i \vec{k \vec{x}}}-{e}^{- \frac{{σ}^{2}}{2}}\right]}$ Where $\vec{k} = \left\{\begin{matrix}{k}_{h} \\ {k}_{v}\end{matrix}\right\} = \left\{\begin{matrix}k . cos \left(θ\right) \\ k . sin \left(θ\right)\end{matrix}\right\}$

The discrete Gabor wavelet family can be generated based on below parameter set: $Γ = \left({v}_{max}, {ζ}_{max}, {k}_{max}, {k}_{fac}, σ\right)$ Where *vₘₐₓ* represent number of directions, *ζₘₐₓ* denotes the number of scale levels, *kₘₐₓ* is the highest frequency, and *k_{fac}* is the logarithmic distance between two scale levels.

Gabor jets are described as small patch of values in an image *I*(*̅x̅*̅) around a given pixel *̅x̅*̅ = (*x, y*). The grid graph *G_{match}* is created from gabor transform of template image with collection of jets ${\left\{{J}_{i}\right\}}_{i = 1}^{N}$, *N* being number of jets, taken at uniform grid spacing. Similarly, the gabor transform of reference image is split into small overlapped patches of template image size and a step size of 1 and graph collection ${B}_{ref} = {\left\{{G}^{i}\right\}}_{i}^{M}$, where *M* is the number of image patches, is created where jets have same uniform spacing. *G_{match}* is compared with graph collection *B_{ref}* using similarity function as stated below: $S \left(J,J′\right) = {\sum }_{j} cos \left({ϕ}_{j}-{ϕ}_{j}^{′}-{\vec{k}}_{j}^{T}\vec{d}\right)$ Where ${\vec{k}}_{j}^{T}$ represents the frequency center for *j^{th}* wavelet, and *̅d̅*̅ refers to disparity estimation. The evaluated similarity score is denoted as heat map of corresponding size and the peak location denotes the predicted shift of image. With use of Gabor Jet for template matching, the sparse features are evaluated in computationally efficient manner. Unlike FFT correlation, which uses Fourier domain by considering domain features, Gabor Jet uses conjoint spatial-Fourier information along with phase information for prediction. The phase information in jet localization provides improved accuracy than FFT method.

According to the methods and systems of the present disclosure, the Siamese UNET produces a set of features maps corresponding to each of the SAR images as well as the optical images of a specific location (maybe at different times). Further, the proposed method uses a Gabor wavelet matcher for generating a Gabor jet grid graph from the feature maps obtained. The Gabor jet grid graphs are created from the Gabor transform of the set of feature maps obtained from each of the SAR and optical images. The sparse Gabor jet grid graph from the optical image is matched against Gabor jets generated from sliding window operations and similarity calculations. Based on the similarity scores obtained from the sparse sliding window process, a heat map is generated for the identifying the position of maximum similarity score point from the heat map, wherein the plurality of SAR images has the best-fit position within the Optical reference image. Then, the plurality of SAR-optical co-registered images are obtained based on the maximum similarity score points.

In the present disclosure, the Siamese UNET with the encoder-decoder structure was used to map non-linear dependencies and maintain both local and global data. Thus, the present disclosure integrates both the spatial and temporal domains, preserving both global and local characteristics for comparison.

The steps in methods and systems of the present disclosure is explained by considering the SAR images (matching images) and the optical images (reference images) of two different modalities (the first image set of the first modality and the second image set of the second modality) for the image co-registration to better highlight the technical challenges and the technical solution through the present disclosure given the two modality images of a defined geographical region. However, the scope of the present disclosure is not limited to other modality images such as LIDAR images, multi-spectral images, other type of images given the application area such as the remote sensing.

### Example Scenario:

To evaluate the present disclosure, a manually co-registered public dataset QXS-SAROPT (Huang, M., Xu, Y., Qian, L., Shi, W., Zhang, Y., Bao, W., Wang, N., Liu, X., and Xiang, X., "The qxs-saropt dataset for deep learning in sar-optical data fusion,") was used to train and test the model. The dataset is built using the Google Earth and GaoFen-3 datasets. To support deep learning research in SAR-optical data fusion, the QXS-SAROPT dataset has been established. The QXS-SAROPT is made up of 20,000 pairs of matching image patches that were gathered from three port cities: San Diego, Shanghai, and Qingdao. The images were obtained using Google Earth optical satellites and the SAR satellite GaoFen-3. The dataset includes windows of 256x256 optical images and 192x192 SAR images. The optical images are converted to grayscale, and the corresponding SAR images are augmented using cropping operations by choosing row and column offsets using uniform distribution, and the left top coordinate of the SAR image is considered as the truth label. The training and test data are created with a 9:1 division.

Implementation: To train the network, a series tensor pairs of normalized optical image of dimension (batchsize,1,256,256) and SAR image of (batchsize,1,192,192) is given as input to the Siamese network. The Siamese U-Net has been defined, as proposed, in FIG. 3. The output of the Siamese network is connected to Gabor wavelet matcher. The graph collection is generated for reference image patches and matched with the template image graph. The similarity score was calculated and represented as heat-map. By leveraging tensor operations, jet tensor comparison was performed in one shot. The peak location in the resulting heat map of (65x65) dimension provides the predicted shift. For implementation of the proposed pipeline/method of the present disclosure, PyTorch 2.3.0 deep learning framework was used with A5500 GPU for network model training and evaluation. The whole training process took 28 hours.

The performance of the present disclosure is assessed by contrasting it with the State of The Art (SOTA) technique currently in use, Siam U-Net FFT. Siam U-Net FFT utilizes a deep learning architecture derived from Siamese U-net, incorporating a FFT correlation layer. Table 1 shows the comparison results. In the table, matching accuracy is quantified as the percentage of the cases where the Euclidean distance (i.e. L2-distance) between the predicted location and the target ground-truth location is smaller than a specified number (1, 3, 5, and 7) of pixels. Additionally, Precision is measured by taking averages over the Euclidean distances between the predicted points and the target locations, measured in pixels. Table 1 demonstrates that the methods and systems of the present disclosure utilizing the Gabor-jet approach achieve higher matching accuracy compared to the current SOTA.

**Table 1**

| Techniques | Accuracy (%) | | | | Precision |
|---|---|---|---|---|---|
| | <=1 | <=3 | <=5 | <=7 | Avg L2 (pixel) |
| Siam U-Net FFT | 43.33 | 73.97 | 74.97 | 75.6 | 6.539 |
| Siam U-Net Gabor (Present disclosure) | 58.97 | 80.8 | 82.1 | 83.37 | 4.678 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of image co-registration of multi-modal temporal sensing using a deep-learning based multi-input-output encoder-decoder network (such as Integrated U-Net architecture) with a Gabor Jet Model. The deep-learning based multi-input-output encoder-decoder network is utilized for the feature extraction. A distinctive Gabor-jet layer of the Gabor Jet Model is utilized for the similarity matching.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), comprising:
receiving for a predefined region of interest, via one or more hardware processors, a first image set and a second image set, wherein the first image set comprises a plurality of reference images and the second image set comprises a plurality of matching images, and wherein the first image set and the second image set are orthorectified to each other with one-to-one association (202);
dividing, via the one or more hardware processors, (i) each reference image of the plurality of reference images to obtain one or more reference image patches associated with each reference image, and (ii) each matching image of the plurality of matching images to obtain one or more matching image patches associated with each matching image, using an image splitting technique (204);
extracting in a homogeneous latent space, via the one or more hardware processors, using an encoder of a deep-learning based multi-input-output encoder-decoder network, (i) a plurality of reference feature maps associated with each reference image patch of the one or more reference image patches associated with each of the plurality of reference images, (ii) a plurality of matching image feature maps associated with each matching image patch of the one or more matching image patches associated with each of the plurality of matching images (206);
determining, via the one or more hardware processors, a similarity score between (i) each reference image of the plurality of reference images present in the first image set and (ii) a matching image associated with each reference image and is of the plurality of matching images present in the second image set, by employing a Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images (208); and
generating, via the one or more hardware processors, one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set (210).

2. The processor-implemented method (200) as claimed in claim 1, wherein the first image set is associated with a first modality and the second image set is associated with a second modality.

3. The processor-implemented method (200) as claimed in claim 1, wherein determining the similarity score between (i) each reference image of the plurality of reference images present in the first image set and (ii) a matching image associated with each reference image and is of the plurality of matching images present in the second image set, by employing the Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images, comprises:
performing a Gabor transformation on (i) each reference feature map of the plurality of reference feature maps and (ii) each matching image feature map of the plurality of matching image feature maps, to obtain (i) a plurality of transformed reference feature maps from the plurality of reference feature maps associated with each reference image patch of the one or more reference image patches associated with each of the plurality of reference images and (ii) a plurality of transformed matching image feature maps from the plurality of matching image feature maps associated with each matching image patch of the one or more matching image patches associated with each of the plurality of matching images, respectively (208a);
generating (i) a plurality of reference Gabor jet grid graphs from the plurality of transformed reference feature maps associated with each reference image patch of the one or more reference image patches associated with each of the plurality of reference images and (ii) a plurality of matching Gabor jet grid graphs from the plurality of transformed matching image feature maps associated with each matching image patch of the one or more matching image patches associated with each of the plurality of matching images (208b); and
determining the similarity score between (i) each reference image and (ii) the matching image associated with each reference image, by employing a sparse sliding window matching technique, using the plurality of reference Gabor jet grid graphs associated with each reference image patch of the one or more reference image patches associated with each reference image and the plurality of matching Gabor jet grid graphs associated with each matching image patch of the one or more matching image patches associated with each matching image (208c).

4. The processor-implemented method (200) as claimed in claim 1, wherein generating the one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set, comprises:
determining a heat map for (i) each reference image and (ii) the matching image associated with each reference image, based on the similarity score associated with (i) each reference image and (ii) the matching image associated with each reference image (210a); and
generating the one or more reference-matching co-registered images for the predefined region of interest, from the plurality of reference images present in the first image set and the plurality of matching images present in the second image set, based on the heat map determined for (i) each reference image and (ii) the matching image associated with each reference image (210b).

5. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive for a predefined region of interest, a first image set and a second image set, wherein the first image set comprises a plurality of reference images and the second image set comprises a plurality of matching images, and wherein the first image set and the second image set are orthorectified to each other with one-to-one association;
divide (i) each reference image of the plurality of reference images to obtain one or more reference image patches associated with each reference image, and (ii) each matching image of the plurality of matching images to obtain one or more matching image patches associated with each matching image, using an image splitting technique;
extract in a homogeneous latent space, using an encoder of a deep-learning based multi-input-output encoder-decoder network, (i) a plurality of reference feature maps associated with each reference image patch of the one or more reference image patches associated with each of the plurality of reference images, (ii) a plurality of matching image feature maps associated with each matching image patch of the one or more matching image patches associated with each of the plurality of matching images;
determine a similarity score between (i) each reference image of the plurality of reference images present in the first image set and (ii) a matching image associated with each reference image and is of the plurality of matching images present in the second image set, by employing a Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images; and
generate one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set.

6. The system (100) as claimed in claim 5, wherein the first image set is associated with a first modality and the second image set is associated with a second modality.

7. The system (100) as claimed in claim 5, wherein the one or more hardware processors (104) are configured to determine the similarity score between (i) each reference image of the plurality of reference images present in the first image set and (ii) a matching image associated with each reference image and is of the plurality of matching images present in the second image set, by employing the Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images, by:
performing a Gabor transformation on (i) each reference feature map of the plurality of reference feature maps and (ii) each matching image feature map of the plurality of matching image feature maps, to obtain (i) a plurality of transformed reference feature maps from the plurality of reference feature maps associated with each reference image patch of the one or more reference image patches associated with each of the plurality of reference images and (ii) a plurality of transformed matching image feature maps from the plurality of matching image feature maps associated with each matching image patch of the one or more matching image patches associated with each of the plurality of matching images, respectively;
generating (i) a plurality of reference Gabor jet grid graphs from the plurality of transformed reference feature maps associated with each reference image patch of the one or more reference image patches associated with each of the plurality of reference images and (ii) a plurality of matching Gabor jet grid graphs from the plurality of transformed matching image feature maps associated with each matching image patch of the one or more matching image patches associated with each of the plurality of matching images; and
determining the similarity score between (i) each reference image and (ii) the matching image associated with each reference image, by employing a sparse sliding window matching technique, using the plurality of reference Gabor jet grid graphs associated with each reference image patch of the one or more reference image patches associated with each reference image and the plurality of matching Gabor jet grid graphs associated with each matching image patch of the one or more matching image patches associated with each matching image.

8. The system (100) as claimed in claim 5, wherein the one or more hardware processors (104) are configured to generate the one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set, by:
determining a heat map for (i) each reference image and (ii) the matching image associated with each reference image, based on the similarity score associated with (i) each reference image and (ii) the matching image associated with each reference image; and
generating the one or more reference-matching co-registered images for the predefined region of interest, from the plurality of reference images present in the first image set and the plurality of matching images present in the second image set, based on the heat map determined for (i) each reference image and (ii) the matching image associated with each reference image.

9. One or more non-transitory machine-readable information storage mediums comprising one or more instructions which when executed by one or more hardware processors cause:
receiving for a predefined region of interest, a first image set and a second image set, wherein the first image set comprises a plurality of reference images and the second image set comprises a plurality of matching images, and wherein the first image set and the second image set are orthorectified to each other with one-to-one association;
dividing, (i) each reference image of the plurality of reference images to obtain one or more reference image patches associated with each reference image, and (ii) each matching image of the plurality of matching images to obtain one or more matching image patches associated with each matching image, using an image splitting technique;
extracting in a homogeneous latent space using an encoder of a deep-learning based multi-input-output encoder-decoder network, (i) a plurality of reference feature maps associated with each reference image patch of the one or more reference image patches associated with each of the plurality of reference images, (ii) a plurality of matching image feature maps associated with each matching image patch of the one or more matching image patches associated with each of the plurality of matching images;
determining a similarity score between (i) each reference image of the plurality of reference images present in the first image set and (ii) a matching image associated with each reference image and is of the plurality of matching images present in the second image set, by employing a Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images; and
generating one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set.

10. The one or more non-transitory machine readable information storage mediums as claimed in claim 9, wherein the first image set is associated with a first modality and the second image set is associated with a second modality.

11. The one or more non-transitory machine readable information storage mediums as claimed in claim 9, wherein determining the similarity score between (i) each reference image of the plurality of reference images present in the first image set and (ii) a matching image associated with each reference image and is of the plurality of matching images present in the second image set, by employing the Gabor-Jet based similarity matching technique, using the plurality of reference feature maps associated with each reference image patch of the one or more reference image patches associated with each of the plurality of reference images and the plurality of matching image feature maps associated with each matching image patch of the one or more matching image patches associated with each of the plurality of matching images, comprises:
performing a Gabor transformation on (i) each reference feature map of the plurality of reference feature maps and (ii) each matching image feature map of the plurality of matching image feature maps, to obtain (i) a plurality of transformed reference feature maps from the plurality of reference feature maps associated with each reference image patch of the one or more reference image patches associated with each of the plurality of reference images and (ii) a plurality of transformed matching image feature maps from the plurality of matching image feature maps associated with each matching image patch of the one or more matching image patches associated with each of the plurality of matching images, respectively;
generating (i) a plurality of reference Gabor jet grid graphs from the plurality of transformed reference feature maps associated with each reference image patch of the one or more reference image patches associated with each of the plurality of reference images and (ii) a plurality of matching Gabor jet grid graphs from the plurality of transformed matching image feature maps associated with each matching image patch of the one or more matching image patches associated with each of the plurality of matching images; and
determining the similarity score between (i) each reference image and (ii) the matching image associated with each reference image, by employing a sparse sliding window matching technique, using the plurality of reference Gabor jet grid graphs associated with each reference image patch of the one or more reference image patches associated with each reference image and the plurality of matching Gabor jet grid graphs associated with each matching image patch of the one or more matching image patches associated with each matching image.

12. The one or more non-transitory machine readable information storage mediums as claimed in claim 9, wherein generating the one or more reference-matching co-registered images for the predefined region of interest, from the plurality of reference images present in the first image set and the plurality of matching images present in the second image set, based on the similarity score between (i) each reference image present in the first image set and (ii) the matching image associated with each reference image and is of the plurality of matching images present in the second image set, comprises:
determining a heat map for (i) each reference image and (ii) the matching image associated with each reference image, based on the similarity score associated with (i) each reference image and (ii) the matching image associated with each reference image; and
generating the one or more reference-matching co-registered images for the predefined region of interest, from the plurality of reference images present in the first image set and the plurality of matching images present in the second image set, based on the heat map determined for (i) each reference image and (ii) the matching image associated with each reference image.

## Patentansprüche

1. Prozessorimplementiertes Verfahren (200), umfassend:
Empfangen eines ersten Bildsatzes und eines zweiten Bildsatzes für eine vordefinierte Region von Interesse über einen oder mehrere Hardwareprozessoren, wobei der erste Bildsatz eine Mehrzahl von Referenzbildern umfasst und der zweite Bildsatz eine Mehrzahl von übereinstimmenden Bildern umfasst, und wobei der erste Bildsatz und der zweite Bildsatz mit einer Eins-zu-Eins-Zuordnung (202) zueinander orthorektifiziert werden;
Unterteilen (i) jedes Referenzbildes der Mehrzahl von Referenzbildern über den einen oder die mehreren Hardwareprozessoren, um einen oder mehrere Referenzbildflecken zu erhalten, die jedem Referenzbild zugeordnet sind, und (ii) jedes übereinstimmenden Bildes der Mehrzahl von übereinstimmenden Bildern, um einen oder mehrere übereinstimmende Bildflecken zu erhalten, die jedem übereinstimmenden Bild zugeordnet sind, unter Verwendung einer Bildteilungstechnik (204);
Extrahieren (i) einer Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, (ii) einer Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, in einem homogenen latenten Raum über den einen oder die mehreren Hardwareprozessoren unter Verwendung eines Codierers eines Deep-Learning-basierten Multi-Eingabe-Ausgabe-Codierer-Decodierer-Netzwerks (206);
Bestimmen einer Ähnlichkeitsbewertung zwischen (i) jedem Referenzbild der Mehrzahl von Referenzbildern, die in dem ersten Bildsatz vorhanden sind, und (ii) einem übereinstimmenden Bild, das jedem Referenzbild zugeordnet ist und zu der Mehrzahl von übereinstimmenden Bildern gehört, die in dem zweiten Bildsatz vorhanden sind, über den einen oder die mehreren Hardwareprozessoren unter Verwendung einer Gabor-Jet-basierten Ähnlichkeitsanpassungstechnik unter Verwendung der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, und der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind (208); und
Erzeugen eines oder mehrerer referenzanpassender, gemeinsam registrierter Bilder für die vordefinierte Region von Interesse über den einen oder die mehreren Hardwareprozessoren aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Ähnlichkeitsbewertung zwischen (i) jedem Referenzbild, das in dem ersten Bildsatz vorhanden ist, und (ii) dem übereinstimmenden Bild, das jedem Referenzbild zugeordnet ist und zu der Mehrzahl von übereinstimmenden Bildern gehört, die in dem zweiten Bildsatz vorhanden sind (210).

2. Prozessorimplementiertes Verfahren (200) nach Anspruch 1, wobei der erste Bildsatz einer ersten Modalität zugeordnet ist und der zweite Bildsatz einer zweiten Modalität zugeordnet ist.

3. Prozessorimplementiertes Verfahren (200) nach Anspruch 1, wobei das Bestimmen der Ähnlichkeitsbewertung zwischen (i) jedem Referenzbild der Mehrzahl von Referenzbildern, die in dem ersten Bildsatz vorhanden sind, und (ii) einem übereinstimmenden Bild, das jedem Referenzbild zugeordnet ist und zu der Mehrzahl von übereinstimmenden Bildern gehört, die in dem zweiten Bildsatz vorhanden sind, unter Verwendung der Gabor-Jet-basierten Ähnlichkeitsanpassungstechnik unter Verwendung der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, und der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, umfasst:
Durchführen einer Gabor-Transformation an (i) jeder Referenzmerkmalskarte der Mehrzahl von Referenzmerkmalskarten und (ii) jeder übereinstimmenden Bildmerkmalskarte der Mehrzahl von übereinstimmenden Bildmerkmalskarten, um (i) eine Mehrzahl von transformierten Referenzmerkmalskarten aus der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, bzw. (ii) eine Mehrzahl von transformierten übereinstimmenden Bildmerkmalskarten aus der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, zu erhalten (208a);
Erzeugen (i) einer Mehrzahl von Referenz-Gabor-Jet-Gittergraphen aus der Mehrzahl von transformierten Referenzmerkmalskarten, die jedem Referenzbildfleck des einen oder der mehreren Referenzbildflecken zugeordnet sind, die jedem der Mehrzahl von Referenzbildern zugeordnet sind, und (ii) einer Mehrzahl von übereinstimmenden Gabor-Jet-Gittergraphen aus der Mehrzahl von transformierten übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind (208b); und
Bestimmen der Ähnlichkeitsbewertung zwischen (i) jedem Referenzbild und (ii) dem übereinstimmenden Bild, das jedem Referenzbild zugeordnet ist, unter Verwendung einer dünnbesetzten Gleitfensteranpassungstechnik unter Verwendung der Mehrzahl von Referenz-Gabor-Jet-Gittergraphen, die jedem Referenzbildfleck des einen oder der mehreren Referenzbildflecken zugeordnet sind, die jedem Referenzbild zugeordnet sind, und der Mehrzahl von übereinstimmenden Gabor-Jet-Gittergraphen, die jedem übereinstimmenden Bildfleck des einen oder der mehreren übereinstimmenden Bildflecken zugeordnet sind, die jedem übereinstimmenden Bild zugeordnet sind (208c).

4. Prozessorimplementiertes Verfahren (200) nach Anspruch 1, wobei das Erzeugen des einen oder der mehreren referenzanpassenden, gemeinsam registrierten Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Ähnlichkeitsbewertung zwischen (i) jedem Referenzbild, das in dem ersten Bildsatz vorhanden ist, und (ii) dem übereinstimmenden Bild, das jedem Referenzbild zugeordnet ist und zu der Mehrzahl von übereinstimmenden Bildern gehört, die in dem zweiten Bildsatz vorhanden sind, umfasst:
Bestimmen einer Wärmekarte für (i) jedes Referenzbild und (ii) das übereinstimmende Bild, das jedem Referenzbild zugeordnet ist, basierend auf der Ähnlichkeitsbewertung, die (i) jedem Referenzbild und (ii) dem übereinstimmenden Bild zugeordnet ist, das jedem Referenzbild zugeordnet ist (210a); und
Erzeugen des einen oder der mehreren referenzanpassenden, gemeinsam registrierten Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Wärmekarte, die für (i) jedes Referenzbild und (ii) das übereinstimmende Bild bestimmt wird, das jedem Referenzbild zugeordnet ist (210b).

5. System (100), umfassend:
einen Speicher (102), der Anweisungen speichert;
eine oder mehrere Eingabe/Ausgabe(E/A)-Schnittstellen (106); und
einen oder mehrere Hardwareprozessoren (104), die mit dem Speicher (102) über die eine oder die mehreren E/A-Schnittstellen (106) gekoppelt sind, wobei der eine oder die mehreren Hardwareprozessoren (104) durch die Anweisungen konfiguriert sind zum:
Empfangen eines ersten Bildsatzes und eines zweiten Bildsatzes für eine vordefinierte Region von Interesse, wobei der erste Bildsatz eine Mehrzahl von Referenzbildern umfasst und der zweite Bildsatz eine Mehrzahl von übereinstimmenden Bildern umfasst, und wobei der erste Bildsatz und der zweite Bildsatz mit einer Eins-zu-Eins-Zuordnung zueinander orthorektifiziert werden;
Unterteilen (i) jedes Referenzbildes der Mehrzahl von Referenzbildern, um einen oder mehrere Referenzbildflecken zu erhalten, die jedem Referenzbild zugeordnet sind, und (ii) jedes übereinstimmenden Bildes der Mehrzahl von übereinstimmenden Bildern, um einen oder mehrere übereinstimmende Bildflecken zu erhalten, die jedem übereinstimmenden Bild zugeordnet sind, unter Verwendung einer Bildteilungstechnik;
Extrahieren (i) einer Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, (ii) einer Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, in einem homogenen latenten Raum unter Verwendung eines Codierers eines Deep-Learning-basierten Multi-Eingabe-Ausgabe-Codierer-Decodierer-Netzwerks;
Bestimmen einer Ähnlichkeitsbewertung zwischen (i) jedem Referenzbild der Mehrzahl von Referenzbildern, die in dem ersten Bildsatz vorhanden sind, und (ii) einem übereinstimmenden Bild, das jedem Referenzbild zugeordnet ist und zu der Mehrzahl von übereinstimmenden Bildern gehört, die in dem zweiten Bildsatz vorhanden sind, unter Verwendung einer Gabor-Jet-basierten Ähnlichkeitsanpassungstechnik unter Verwendung der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, und der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind; und
Erzeugen eines oder mehrerer referenzanpassender, gemeinsam registrierter Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Ähnlichkeitsbewertung zwischen (i) jedem Referenzbild, das in dem ersten Bildsatz vorhanden ist, und (ii) dem übereinstimmenden Bild, das jedem Referenzbild zugeordnet ist und zu der Mehrzahl von übereinstimmenden Bildern gehört, die in dem zweiten Bildsatz vorhanden sind.

6. System (100) nach Anspruch 5, wobei der erste Bildsatz einer ersten Modalität zugeordnet ist und der zweite Bildsatz einer zweiten Modalität zugeordnet ist.

7. System (100) nach Anspruch 5, wobei der eine oder die mehreren Hardwareprozessoren (104) konfiguriert sind zum Bestimmen der Ähnlichkeitsbewertung zwischen (i) jedem Referenzbild der Mehrzahl von Referenzbildern, die in dem ersten Bildsatz vorhanden sind, und (ii) einem übereinstimmenden Bild, das jedem Referenzbild zugeordnet ist und zu der Mehrzahl von übereinstimmenden Bildern gehört, die in dem zweiten Bildsatz vorhanden sind, unter Verwendung der Gabor-Jet-basierten Ähnlichkeitsanpassungstechnik unter Verwendung der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, und der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, durch:
Durchführen einer Gabor-Transformation an (i) jeder Referenzmerkmalskarte der Mehrzahl von Referenzmerkmalskarten und (ii) jeder übereinstimmenden Bildmerkmalskarte der Mehrzahl von übereinstimmenden Bildmerkmalskarten, um (i) eine Mehrzahl von transformierten Referenzmerkmalskarten aus der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, bzw. (ii) eine Mehrzahl von transformierten übereinstimmenden Bildmerkmalskarten aus der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, zu erhalten;
Erzeugen (i) einer Mehrzahl von Referenz-Gabor-Jet-Gittergraphen aus der Mehrzahl von transformierten Referenzmerkmalskarten, die jedem Referenzbildfleck des einen oder der mehreren Referenzbildflecken zugeordnet sind, die jedem der Mehrzahl von Referenzbildern zugeordnet sind, und (ii) einer Mehrzahl von übereinstimmenden Gabor-Jet-Gittergraphen aus der Mehrzahl von transformierten übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind; und
Bestimmen der Ähnlichkeitsbewertung zwischen (i) jedem Referenzbild und (ii) dem übereinstimmenden Bild, das jedem Referenzbild zugeordnet ist, unter Verwendung einer dünnbesetzten Gleitfensteranpassungstechnik unter Verwendung der Mehrzahl von Referenz-Gabor-Jet-Gittergraphen, die jedem Referenzbildfleck des einen oder der mehreren Referenzbildflecken zugeordnet sind, die jedem Referenzbild zugeordnet sind, und der Mehrzahl von übereinstimmenden Gabor-Jet-Gittergraphen, die jedem übereinstimmenden Bildfleck des einen oder der mehreren übereinstimmenden Bildflecken zugeordnet sind, die jedem übereinstimmenden Bild zugeordnet sind.

8. System (100) nach Anspruch 5, wobei der eine oder die mehreren Hardwareprozessoren (104) konfiguriert sind zum Erzeugen des einen oder der mehreren referenzanpassenden, gemeinsam registrierten Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Ähnlichkeitsbewertung zwischen (i) jedem Referenzbild, das in dem ersten Bildsatz vorhanden ist, und (ii) dem übereinstimmenden Bild, das jedem Referenzbild zugeordnet ist und zu der Mehrzahl von übereinstimmenden Bildern gehört, die in dem zweiten Bildsatz vorhanden sind, durch:
Bestimmen einer Wärmekarte für (i) jedes Referenzbild und (ii) das übereinstimmende Bild, das jedem Referenzbild zugeordnet ist, basierend auf der Ähnlichkeitsbewertung, die (i) jedem Referenzbild und (ii) dem übereinstimmenden Bild zugeordnet ist, das jedem Referenzbild zugeordnet ist; und
Erzeugen des einen oder der mehreren referenzanpassenden, gemeinsam registrierten Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Wärmekarte, die für (i) jedes Referenzbild und (ii) das übereinstimmende Bild bestimmt wird, das jedem Referenzbild zugeordnet ist.

9. Ein oder mehrere nichtflüchtige maschinenlesbare Informationsspeichermedien, umfassend eine oder mehrere Anweisungen, die bei Ausführung durch einen oder mehrere Hardwareprozessoren bewirken:
Empfangen eines ersten Bildsatzes und eines zweiten Bildsatzes für eine vordefinierte Region von Interesse, wobei der erste Bildsatz eine Mehrzahl von Referenzbildern umfasst und der zweite Bildsatz eine Mehrzahl von übereinstimmenden Bildern umfasst, und wobei der erste Bildsatz und der zweite Bildsatz mit einer Eins-zu-Eins-Zuordnung zueinander orthorektifiziert werden;
Unterteilen (i) jedes Referenzbildes der Mehrzahl von Referenzbildern, um einen oder mehrere Referenzbildflecken zu erhalten, die jedem Referenzbild zugeordnet sind, und (ii) jedes übereinstimmenden Bildes der Mehrzahl von übereinstimmenden Bildern, um einen oder mehrere übereinstimmende Bildflecken zu erhalten, die jedem übereinstimmenden Bild zugeordnet sind, unter Verwendung einer Bildteilungstechnik;
Extrahieren (i) einer Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, (ii) einer Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, in einem homogenen latenten Raum unter Verwendung eines Codierers eines Deep-Learning-basierten Multi-Eingabe-Ausgabe-Codierer-Decodierer-Netzwerks;
Bestimmen einer Ähnlichkeitsbewertung zwischen (i) jedem Referenzbild der Mehrzahl von Referenzbildern, die in dem ersten Bildsatz vorhanden sind, und (ii) einem übereinstimmenden Bild, das jedem Referenzbild zugeordnet ist und zu der Mehrzahl von übereinstimmenden Bildern gehört, die in dem zweiten Bildsatz vorhanden sind, unter Verwendung einer Gabor-Jet-basierten Ähnlichkeitsanpassungstechnik unter Verwendung der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, und der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind; und
Erzeugen eines oder mehrerer referenzanpassender, gemeinsam registrierter Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Ähnlichkeitsbewertung zwischen (i) jedem Referenzbild, das in dem ersten Bildsatz vorhanden ist, und (ii) dem übereinstimmenden Bild, das jedem Referenzbild zugeordnet ist und zu der Mehrzahl von übereinstimmenden Bildern gehört, die in dem zweiten Bildsatz vorhanden sind.

10. Ein oder mehrere nichtflüchtige maschinenlesbare Informationsspeichermedien nach Anspruch 9, wobei der erste Bildsatz einer ersten Modalität zugeordnet ist und der zweite Bildsatz einer zweiten Modalität zugeordnet ist.

11. Ein oder mehrere nichtflüchtige maschinenlesbare Informationsspeichermedien nach Anspruch 9, wobei das Bestimmen der Ähnlichkeitsbewertung zwischen (i) jedem Referenzbild der Mehrzahl von Referenzbildern, die in dem ersten Bildsatz vorhanden sind, und (ii) einem übereinstimmenden Bild, das jedem Referenzbild zugeordnet ist und zu der Mehrzahl von übereinstimmenden Bildern gehört, die in dem zweiten Bildsatz vorhanden sind, unter Verwendung der Gabor-Jet-basierten Ähnlichkeitsanpassungstechnik unter Verwendung der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, und der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, umfasst:
Durchführen einer Gabor-Transformation an (i) jeder Referenzmerkmalskarte der Mehrzahl von Referenzmerkmalskarten und (ii) jeder übereinstimmenden Bildmerkmalskarte der Mehrzahl von übereinstimmenden Bildmerkmalskarten, um (i) eine Mehrzahl von transformierten Referenzmerkmalskarten aus der Mehrzahl von Referenzmerkmalskarten, die jedem Referenzbildfleck des einen oder der mehreren Referenzbildflecken zugeordnet sind, die jedem der Mehrzahl von Referenzbildern zugeordnet sind, bzw. (ii) eine Mehrzahl von transformierten übereinstimmenden Bildmerkmalskarten aus der Mehrzahl von übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind, zu erhalten;
Erzeugen (i) einer Mehrzahl von Referenz-Gabor-Jet-Gittergraphen aus der Mehrzahl von transformierten Referenzmerkmalskarten, die jedem Referenzbildfleck des einen oder der mehreren Referenzbildflecken zugeordnet sind, die jedem der Mehrzahl von Referenzbildern zugeordnet sind, und (ii) einer Mehrzahl von übereinstimmenden Gabor-Jet-Gittergraphen aus der Mehrzahl von transformierten übereinstimmenden Bildmerkmalskarten, die jedem übereinstimmenden Bildfleck des einen oder der mehreren übereinstimmenden Bildflecken zugeordnet sind, die jedem der Mehrzahl von übereinstimmenden Bildern zugeordnet sind; und
Bestimmen der Ähnlichkeitsbewertung zwischen (i) jedem Referenzbild und (ii) dem übereinstimmenden Bild, das jedem Referenzbild zugeordnet ist, unter Verwendung einer dünnbesetzten Gleitfensteranpassungstechnik unter Verwendung der Mehrzahl von Referenz-Gabor-Jet-Gittergraphen, die jedem Referenzbildfleck des einen oder der mehreren Referenzbildflecken zugeordnet sind, die jedem Referenzbild zugeordnet sind, und der Mehrzahl von übereinstimmenden Gabor-Jet-Gittergraphen, die jedem übereinstimmenden Bildfleck des einen oder der mehreren übereinstimmenden Bildflecken zugeordnet sind, die jedem übereinstimmenden Bild zugeordnet sind.

12. Ein oder mehrere nichtflüchtige maschinenlesbare Informationsspeichermedien nach Anspruch 9, wobei das Erzeugen des einen oder der mehreren referenzanpassenden, gemeinsam registrierten Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Ähnlichkeitsbewertung zwischen (i) jedem Referenzbild, das in dem ersten Bildsatz vorhanden ist, und (ii) dem übereinstimmenden Bild, das jedem Referenzbild zugeordnet ist und zu der Mehrzahl von übereinstimmenden Bildern gehört, die in dem zweiten Bildsatz vorhanden sind, umfasst:
Bestimmen einer Wärmekarte für (i) jedes Referenzbild und (ii) das übereinstimmende Bild, das jedem Referenzbild zugeordnet ist, basierend auf der Ähnlichkeitsbewertung, die (i) jedem Referenzbild und (ii) dem übereinstimmenden Bild zugeordnet ist, das jedem Referenzbild zugeordnet ist; und
Erzeugen des einen oder der mehreren referenzanpassenden, gemeinsam registrierten Bilder für die vordefinierte Region von Interesse aus der Mehrzahl von Referenzbildern, die in dem ersten Bildsatz vorhanden sind, und der Mehrzahl von übereinstimmenden Bildern, die in dem zweiten Bildsatz vorhanden sind, basierend auf der Wärmekarte, die für (i) jedes Referenzbild und (ii) das übereinstimmende Bild bestimmt wird, das jedem Referenzbild zugeordnet ist.

## Revendications

1. Procédé mis en œuvre par processeur (200), comprenant :
la réception, pour une région d'intérêt prédéfinie, via un ou plusieurs processeurs matériels, d'un premier ensemble d'images et d'un second ensemble d'images, dans lequel le premier ensemble d'images comprend une pluralité d'images de référence et le second ensemble d'images comprend une pluralité d'images correspondantes, et dans lequel le premier ensemble d'images et le second ensemble d'images sont orthorectifiés l'un par rapport à l'autre avec une association biunivoque (202) ;
la division, via les un ou plusieurs processeurs matériels, (i) de chaque image de référence de la pluralité d'images de référence pour obtenir une ou plusieurs zones d'image de référence associées à chaque image de référence, et (ii) de chaque image correspondante de la pluralité d'images correspondantes pour obtenir une ou plusieurs zones d'image correspondantes associées à chaque image correspondante, en utilisant une technique de division d'image (204) ;
l'extraction, dans un espace latent homogène, via les un ou plusieurs processeurs matériels, en utilisant un codeur d'un réseau codeur-décodeur à entrées et sorties multiples basé sur un apprentissage profond, (i) d'une pluralité de cartes de caractéristiques de référence associées à chaque zone d'image de référence des une ou plusieurs zones d'image de référence associées à chacune de la pluralité d'images de référence, (ii) d'une pluralité de cartes de caractéristiques d'image correspondantes associées à chaque zone d'image correspondante des une ou plusieurs zones d'image correspondantes associées à chacune de la pluralité d'images correspondantes (206) ;
la détermination, via les un ou plusieurs processeurs matériels, d'un score de similarité entre (i) chaque image de référence de la pluralité d'images de référence présentes dans le premier ensemble d'images et (ii) une image correspondante associée à chaque image de référence et qui est de la pluralité d'images correspondantes présentes dans le second ensemble d'images, en utilisant une technique de correspondance par similarité basée sur Gabor-Jet, en utilisant la pluralité de cartes de caractéristiques de référence associées à chaque zone d'image de référence des une ou plusieurs zones d'image de référence associées à chacune de la pluralité d'images de référence et la pluralité de cartes de caractéristiques d'image correspondantes associées à chaque zone d'image correspondante des une ou plusieurs zones d'image correspondantes associées à chacune de la pluralité d'images correspondantes (208) ; et
la génération, via les un ou plusieurs processeurs matériels, d'une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base du score de similarité entre (i) chaque image de référence présente dans le premier ensemble d'images et (ii) l'image correspondante associée à chaque image de référence et qui est de la pluralité d'images correspondantes présentes dans le second ensemble d'images (210).

2. Procédé mis en œuvre par processeur (200) selon la revendication 1, dans lequel le premier ensemble d'images est associé à une première modalité et le second ensemble d'images est associé à une seconde modalité.

3. Procédé mis en œuvre par processeur (200) selon la revendication 1, dans lequel la détermination du score de similarité entre (i) chaque image de référence de la pluralité d'images de référence présentes dans le premier ensemble d'images et (ii) une image correspondante associée à chaque image de référence et qui est de la pluralité d'images correspondantes présentes dans le second ensemble d'images, en utilisant la technique de correspondance par similarité basée sur Gabor-Jet, en utilisant la pluralité de cartes de caractéristiques de référence associées à chaque zone d'image de référence des une ou plusieurs zones d'image de référence associées à chacune de la pluralité d'images de référence et la pluralité de cartes de caractéristiques d'image correspondantes associées à chaque zone d'image correspondante des une ou plusieurs zones d'image correspondantes associées à chacune de la pluralité d'images correspondantes, comprend :
l'exécution d'une transformation de Gabor sur (i) chaque carte de caractéristiques de référence de la pluralité de cartes de caractéristiques de référence et (ii) chaque carte de caractéristiques d'image correspondante de la pluralité de cartes de caractéristiques d'image correspondantes, pour obtenir (i) une pluralité de cartes de caractéristiques de référence transformées à partir de la pluralité de cartes de caractéristiques de référence associées à chaque zone d'image de référence des une ou plusieurs zones d'image de référence associées à chacune de la pluralité d'images de référence et (ii) une pluralité de cartes de caractéristiques d'image correspondantes transformées à partir de la pluralité de cartes de caractéristiques d'image correspondantes associées à chaque zone d'image correspondante des une ou plusieurs zones d'image correspondantes associées à chacune de la pluralité d'images correspondantes, respectivement (208a) ;
la génération (i) d'une pluralité de graphes de grille de Gabor-Jet de référence à partir de la pluralité de cartes de caractéristiques de référence transformées associées à chaque zone d'image de référence des une ou plusieurs zones d'image de référence associées à chacune de la pluralité d'images de référence et (ii) d'une pluralité de graphes de grille de Gabor-Jet correspondants à partir de la pluralité de cartes de caractéristiques d'image correspondantes transformées associées à chaque zone d'image correspondante des une ou plusieurs zones d'image correspondantes associées à chacune de la pluralité d'images correspondantes (208b) ; et
la détermination du score de similarité entre (i) chaque image de référence et (ii) l'image correspondante associée à chaque image de référence, en utilisant une technique de mise en correspondance parcimonieuse par fenêtre coulissante, en utilisant la pluralité de graphes de grille de Gabor-Jet de référence associés à chaque zone d'image de référence des une ou plusieurs zones d'image de référence associées à chaque image de référence et la pluralité de graphes de grille de Gabor-Jet correspondants associés à chaque zone d'image correspondante des une ou plusieurs zones d'image correspondantes associées à chaque image correspondante (208c).

4. Procédé mis en œuvre par processeur (200) selon la revendication 1, dans lequel la génération des une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base du score de similarité entre (i) chaque image de référence présente dans le premier ensemble d'images et (ii) l'image correspondante associée à chaque image de référence et qui est de la pluralité d'images correspondantes présentes dans le second ensemble d'images, comprend :
la détermination d'une carte thermique pour (i) chaque image de référence et (ii) l'image correspondante associée à chaque image de référence, sur la base du score de similarité associé à (i) chaque image de référence et (ii) l'image correspondante associée à chaque image de référence (210a) ; et
la génération des une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base de la carte thermique déterminée pour (i) chaque image de référence et (ii) l'image correspondante associée à chaque image de référence (210b).

5. Système (100), comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
recevoir, pour une région d'intérêt prédéfinie, un premier ensemble d'images et un second ensemble d'images, dans lequel le premier ensemble d'images comprend une pluralité d'images de référence et le second ensemble d'images comprend une pluralité d'images correspondantes, et dans lequel le premier ensemble d'images et le second ensemble d'images sont orthorectifiés l'un par rapport à l'autre avec une association biunivoque ;
diviser (i) chaque image de référence de la pluralité d'images de référence pour obtenir une ou plusieurs zones d'image de référence associées à chaque image de référence, et (ii) chaque image correspondante de la pluralité d'images correspondantes pour obtenir une ou plusieurs zones d'image correspondantes associées à chaque image correspondante, en utilisant une technique de division d'image ;
extraire, dans un espace latent homogène, en utilisant un codeur d'un réseau codeur-décodeur à entrées et sorties multiples basé sur un apprentissage profond, (i) une pluralité de cartes de caractéristiques de référence associées à chaque zone d'image de référence des une ou plusieurs zones d'image de référence associées à chacune de la pluralité d'images de référence, (ii) une pluralité de cartes de caractéristiques d'image correspondantes associées à chaque zone d'image correspondante des une ou plusieurs zones d'image correspondantes associées à chacune de la pluralité d'images correspondantes ;
déterminer un score de similarité entre (i) chaque image de référence de la pluralité d'images de référence présentes dans le premier ensemble d'images et (ii) une image correspondante associée à chaque image de référence et qui est de la pluralité d'images correspondantes présentes dans le second ensemble d'images, en utilisant une technique de correspondance par similarité basée sur Gabor-Jet, en utilisant la pluralité de cartes de caractéristiques de référence associées à chaque zone d'image de référence des une ou plusieurs zones d'image de référence associées à chacune de la pluralité d'images de référence et la pluralité de cartes de caractéristiques d'image correspondantes associées à chaque zone d'image correspondante des une ou plusieurs zones d'image correspondantes associées à chacune de la pluralité d'images correspondantes ; et
générer une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base du score de similarité entre (i) chaque image de référence présente dans le premier ensemble d'images et (ii) l'image correspondante associée à chaque image de référence et qui est de la pluralité d'images correspondantes présentes dans le second ensemble d'images.

6. Système (100) selon la revendication 5, dans lequel le premier ensemble d'images est associé à une première modalité et le second ensemble d'images est associé à une seconde modalité.

7. Système (100) selon la revendication 5, dans lequel les un ou plusieurs processeurs matériels (104) sont configurés pour déterminer le score de similarité entre (i) chaque image de référence de la pluralité d'images de référence présentes dans le premier ensemble d'images et (ii) une image correspondante associée à chaque image de référence et qui est de la pluralité d'images correspondantes présentes dans le second ensemble d'images, en utilisant la technique de correspondance par similarité basée sur Gabor-Jet, en utilisant la pluralité de cartes de caractéristiques de référence associées à chaque zone d'image de référence des une ou plusieurs zones d'image de référence associées à chacune de la pluralité d'images de référence et la pluralité de cartes de caractéristiques d'image correspondantes associées à chaque zone d'image correspondante des une ou plusieurs zones d'image correspondantes associées à chacune de la pluralité d'images correspondantes, en :
effectuant une transformation de Gabor sur (i) chaque carte de caractéristiques de référence de la pluralité de cartes de caractéristiques de référence et (ii) chaque carte de caractéristiques d'image correspondante de la pluralité de cartes de caractéristiques d'image correspondantes, pour obtenir (i) une pluralité de cartes de caractéristiques de référence transformées à partir de la pluralité de cartes de caractéristiques de référence associées à chaque zone d'image de référence des une ou plusieurs zones d'image de référence associées à chacune de la pluralité d'images de référence et (ii) une pluralité de cartes de caractéristiques d'image correspondantes transformées à partir de la pluralité de cartes de caractéristiques d'image correspondantes associées à chaque zone d'image correspondante des une ou plusieurs zones d'image correspondantes associées à chacune de la pluralité d'images correspondantes, respectivement ;
générant (i) une pluralité de graphes de grille de Gabor-Jet de référence à partir de la pluralité de cartes de caractéristiques de référence transformées associées à chaque zone d'image de référence des une ou plusieurs zones d'image de référence associées à chacune de la pluralité d'images de référence et (ii) une pluralité de graphes de grille de Gabor-Jet correspondants à partir de la pluralité de cartes de caractéristiques d'image correspondantes transformées associées à chaque zone d'image correspondante des une ou plusieurs zones d'image correspondantes associées à chacune de la pluralité d'images correspondantes ; et
déterminant le score de similarité entre (i) chaque image de référence et (ii) l'image correspondante associée à chaque image de référence, en utilisant une technique de mise en correspondance parcimonieuse par fenêtre coulissante, en utilisant la pluralité de graphes de grille de Gabor-Jet de référence associés à chaque zone d'image de référence des une ou plusieurs zones d'image de référence associées à chaque image de référence et la pluralité de graphes de grille de Gabor-Jet correspondants associés à chaque zone d'image correspondante des une ou plusieurs zones d'image correspondantes associées à chaque image correspondante.

8. Système (100) selon la revendication 5, dans lequel les un ou plusieurs processeurs matériels (104) sont configurés pour générer les une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base du score de similarité entre (i) chaque image de référence présente dans le premier ensemble d'images et (ii) l'image correspondante associée à chaque image de référence et qui est de la pluralité d'images correspondantes présentes dans le second ensemble d'images, en :
déterminant une carte thermique pour (i) chaque image de référence et (ii) l'image correspondante associée à chaque image de référence, sur la base du score de similarité associé à (i) chaque image de référence et (ii) l'image correspondante associée à chaque image de référence ; et
générant les une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base de la carte thermique déterminée pour (i) chaque image de référence et (ii) l'image correspondante associée à chaque image de référence.

9. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, pour une région d'intérêt prédéfinie, d'un premier ensemble d'images et d'un second ensemble d'images, dans lequel le premier ensemble d'images comprend une pluralité d'images de référence et le second ensemble d'images comprend une pluralité d'images correspondantes, et dans lequel le premier ensemble d'images et le second ensemble d'images sont orthorectifiés l'un par rapport à l'autre avec une association biunivoque ;
la division, (i) de chaque image de référence de la pluralité d'images de référence pour obtenir une ou plusieurs zones d'image de référence associées à chaque image de référence, et (ii) de chaque image correspondante de la pluralité d'images correspondantes pour obtenir une ou plusieurs zones d'image correspondantes associées à chaque image correspondante, en utilisant une technique de division d'image ;
l'extraction, dans un espace latent homogène en utilisant un codeur d'un réseau codeur-décodeur à entrées et sorties multiples basé sur un apprentissage profond, (i) d'une pluralité de cartes de caractéristiques de référence associées à chaque zone d'image de référence des une ou plusieurs zones d'image de référence associées à chacune de la pluralité d'images de référence, (ii) d'une pluralité de cartes de caractéristiques d'image correspondantes associées à chaque zone d'image correspondante des une ou plusieurs zones d'image correspondantes associées à chacune de la pluralité d'images correspondantes ;
la détermination d'un score de similarité entre (i) chaque image de référence de la pluralité d'images de référence présentes dans le premier ensemble d'images et (ii) une image correspondante associée à chaque image de référence et qui est de la pluralité d'images correspondantes présentes dans le second ensemble d'images, en utilisant une technique de correspondance par similarité basée sur Gabor-Jet, en utilisant la pluralité de cartes de caractéristiques de référence associées à chaque zone d'image de référence des une ou plusieurs zones d'image de référence associées à chacune de la pluralité d'images de référence et la pluralité de cartes de caractéristiques d'image correspondantes associées à chaque zone d'image correspondante des une ou plusieurs zones d'image correspondantes associées à chacune de la pluralité d'images correspondantes ; et
la génération d'une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base du score de similarité entre (i) chaque image de référence présente dans le premier ensemble d'images et (ii) l'image correspondante associée à chaque image de référence et qui est de la pluralité d'images correspondantes présentes dans le second ensemble d'images.

10. Un ou plusieurs supports de stockage d'informations lisibles par machine non transitoires selon la revendication 9, dans lequel le premier ensemble d'images est associé à une première modalité et le second ensemble d'images est associé à une seconde modalité.

11. Un ou plusieurs supports de stockage d'informations lisibles par machine non transitoires selon la revendication 9, dans lesquels la détermination du score de similarité entre (i) chaque image de référence de la pluralité d'images de référence présentes dans le premier ensemble d'images et (ii) une image correspondante associée à chaque image de référence et qui est de la pluralité d'images correspondantes présentes dans le second ensemble d'images, en utilisant la technique de correspondance par similarité basée sur Gabor-Jet, en utilisant la pluralité de cartes de caractéristiques de référence associées à chaque zone d'image de référence des une ou plusieurs zones d'image de référence associées à chacune de la pluralité d'images de référence et la pluralité de cartes de caractéristiques d'image correspondantes associées à chaque zone d'image correspondante des une ou plusieurs zones d'image correspondantes associées à chacune de la pluralité d'images correspondantes, comprend :
l'exécution d'une transformation de Gabor sur (i) chaque carte de caractéristiques de référence de la pluralité de cartes de caractéristiques de référence et (ii) chaque carte de caractéristiques d'image correspondante de la pluralité de cartes de caractéristiques d'image correspondantes, pour obtenir (i) une pluralité de cartes de caractéristiques de référence transformées à partir de la pluralité de cartes de caractéristiques de référence associées à chaque zone d'image de référence des une ou plusieurs zones d'image de référence associées à chacune de la pluralité d'images de référence et (ii) une pluralité de cartes de caractéristiques d'image correspondantes transformées à partir de la pluralité de cartes de caractéristiques d'image correspondantes associées à chaque zone d'image correspondante des une ou plusieurs zones d'image correspondantes associées à chacune de la pluralité d'images correspondantes, respectivement ;
la génération (i) d'une pluralité de graphes de grille de Gabor-Jet de référence à partir de la pluralité de cartes de caractéristiques de référence transformées associées à chaque zone d'image de référence des une ou plusieurs zones d'image de référence associées à chacune de la pluralité d'images de référence et (ii) d'une pluralité de graphes de grille de Gabor-Jet correspondants à partir de la pluralité de cartes de caractéristiques d'image correspondantes transformées associées à chaque zone d'image correspondante des une ou plusieurs zones d'image correspondantes associées à chacune de la pluralité d'images correspondantes ; et
la détermination du score de similarité entre (i) chaque image de référence et (ii) l'image correspondante associée à chaque image de référence, en utilisant une technique de mise en correspondance parcimonieuse par fenêtre coulissante, en utilisant la pluralité de graphes de grille de Gabor-Jet de référence associés à chaque zone d'image de référence des une ou plusieurs zones d'image de référence associées à chaque image de référence et la pluralité de graphes de grille de Gabor-Jet correspondants associés à chaque zone d'image correspondante des une ou plusieurs zones d'image correspondantes associées à chaque image correspondante.

12. Un ou plusieurs supports de stockage d'informations lisibles par machine non transitoires selon la revendication 9, dans lesquels la génération des une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base du score de similarité entre (i) chaque image de référence présente dans le premier ensemble d'images et (ii) l'image correspondante associée à chaque image de référence et qui est de la pluralité d'images correspondantes présentes dans le second ensemble d'images, comprend :
la détermination d'une carte thermique pour (i) chaque image de référence et (ii) l'image correspondante associée à chaque image de référence, sur la base du score de similarité associé à (i) chaque image de référence et (ii) l'image correspondante associée à chaque image de référence ; et
la génération des une ou plusieurs images recalées de référence-correspondance pour la région d'intérêt prédéfinie, à partir de la pluralité d'images de référence présentes dans le premier ensemble d'images et de la pluralité d'images correspondantes présentes dans le second ensemble d'images, sur la base de la carte thermique déterminée pour (i) chaque image de référence et (ii) l'image correspondante associée à chaque image de référence.
